# EUROPEAN PATENT SPECIFICATION

(11) **EP 2 600 458 B1**
(45) Date of publication and mention of the grant of the patent: **14.03.2018**
(21) Application number: 11812383.5
(22) Date of filing: 22.07.2011
(51) Int. Cl.: H01M 10/0525, H01M 4/485, H01M 4/505, H01M 4/525, H01M 4/62, H01M 4/66

(54) **LITHIUM ION SECONDARY BATTERY**
LITHIUMIONENSEKUNDÄRBATTERIE
BATTERIE SECONDAIRE AU LITHIUM-ION

(30) Priority: 28.07.2010 JP 2010169248
(43) Date of publication of application: 05.06.2013
(73) Proprietor: NEC Energy Devices, Ltd., Chuo-ku Sagamihara-shi Kanagawa 252-5298 (JP)
(72) Inventor: TAMURA, Hidetoshi, Sagamihara-shi Kanagawa 252-5298 (JP); NOGUCHI, Takehiro, Sagamihara-shi Kanagawa 252-5298 (JP); UEHARA, Makiko, Sagamihara-shi Kanagawa 252-5298 (JP)
(74) Representative: Vossius & Partner Patentanwälte Rechtsanwälte mbB
(86) International application number: PCT/JP2011/066657
(87) International publication number: WO 2012/014793

(56) References cited:
- JP-A- 2000 156 229
- JP-A- 2000 235 857
- JP-A- 2005 317 512
- JP-A- 2007 087 875
- JP-A- 2007 087 875
- US-A1- 2005 019 659
- US-A1- 2005 221 188
- US-A1- 2007 009 797
- US-A1- 2007 009 801

## Description

### Technical Field

An exemplary embodiment relates to a lithium ion secondary battery, and more specifically, to a lithium ion secondary battery which has high energy density and excellent fast-charging characteristics.

### Background Art

With an enhancement of technical development and demand for mobile machinery, demand for secondary batteries as an energy source has sharply increased. Recently, lithium ion secondary batteries have been put into practical use as power sources for electric vehicles (EV), hybrid electric vehicles (HEV) and the like. Many studies have been recently conducted on a lithium ion secondary battery capable of satisfying various requirements. In particular, it is accelerated to develop a lithium ion secondary battery which is inexpensive and has high energy density and fast-charging characteristics.

A lithium ion secondary battery has a configuration in which a positive electrode and a negative electrode face with each other with a separator interposed between them. The positive electrode and the negative electrode are respectively composed of a positive electrode collector and a positive electrode active material, and a negative electrode collector and a negative electrode active material. These elements are each impregnated with a nonaqueous electrolytic solution. In charging or discharging the lithium ion secondary battery, lithium ions dissolved in the electrolytic solution migrate through the separator between the positive electrode and the negative electrode and are absorbed and desorbed by the positive electrode active material and the negative electrode active material, respectively. By this mechanism, it functions as a battery.

As the negative electrode active material used in a lithium ion secondary battery, a material absorbing and desorbing lithium ions such as a carbon material and a metal material forming an alloy with lithium (Li), such as aluminum (Al), silicon (Si) and tin (Sn) are used.

However, a carbon material and a metal material forming an alloy with Li, such as Al, Si, and Sn cause an irreversible reaction during initial charge-discharge time. Furthermore, the reduction potential with respect to Li/Li⁺ is as low as about 0.1 V and easily causes reductive decomposition of a nonaqueous electrolyte on a negative electrode surface. Also reduction of life characteristics due to this phenomenon becomes a problem.

Then, it has been recently proposed that a negative electrode material is substituted with lithium titanate (Li_{4/3}Ti_{5/3}O₄). Li_{4/3}Ti_{5/3}O₄ has a reduction potential as high as about 1.5 V with respect to Li/Li⁺ and can suppress reductive decomposition of a nonaqueous electrolyte on a negative electrode surface. In addition, Li_{4/3}Ti_{5/3}O₄ has a stable crystal structure due to a spinel structure, based on which deterioration of fast-charging characteristics caused by a negative electrode and a nonaqueous electrolyte can be suppressed. Because of these, Li_{4/3}Ti_{5/3}O₄ has been put into practical use. However, since the operation potential of Li_{4/3}Ti_{5/3}O₄ is as high as about 1.5 V with respect to Li/Li⁺, the voltage of a battery reduces compared to graphite (operation voltage: 0 to 0.5 V vs. Li/Li⁺). Thus, Li_{4/3}Ti_{5/3}O₄ has a problem in reduction of energy density.

In contrast, as a positive electrode active material to be used in a lithium ion secondary battery, lithium cobalt oxide (LiCoO₂) has been aggressively studied since its operating voltage exceeds 4 V. For the application in small portable electronic appliances, LiCoO₂ is predominately employed. LiCoO₂, since it exhibits satisfactory characteristics in comprehensive performance including potential flatness, capacity, discharge potential and cycle characteristics, has been widely used as a positive electrode active material of lithium ion secondary batteries at present.

However, Co is expensive since it is unevenly distributed on earth and a rare resource. Therefore, it is difficult to cope with mass production and large-scale production in future in the hope of use in automotive batteries. Furthermore, LiCoO₂ has a bedded salt structure (α-NaFeO₂ structure). When lithium is released during charging, an oxygen layer which has large electronegativity comes next to it. Therefore, in practice, it is necessary to limit the extraction amount of lithium. If the extraction amount of lithium is excessively large like in an overcharge state, electrostatic repulsion occurs between oxygen layers to cause a structural change and heat is generated. Improvement is still required for safety of a battery. To ensure safety of a battery, a large protective circuit is required for the exterior. As a result, energy density decreases. For these reasons, a positive electrode material having high safety has been desired.

Then, a positive electrode material using a lithium-containing transition metal oxide has been proposed, which is basically composed of a positive electrode active material based on Ni, Mn and Fe, which are, as alternative resources of Co, abundant on earth and inexpensive, for example, lithium iron phosphate (LiFePO₄), lithium nickel oxide (LiNiO₂) and lithium manganese oxide (LiMn₂O₄), and started to be used in practice.

LiFePO₄ has an olivine-type structure and oxygen is immobilized by forming a covalent bond with elements other than iron. Because of this, LiFePO₄ does not release oxygen even at a high temperature, and is presumed to enhance safety of a battery, compared to a positive electrode active material such as LiCoO₂, LiNiO₂ and LiMn₂O₄. However, the electric conductivity of LiFePO₄ is about 10⁻⁹ S/cm, which is extremely low compared to the electric conductivities of 10⁻⁵ S/cm of LiMn₂O₄ and LiNiO₂. Its poor fast-charging characteristics are pointed out as a problem. In addition, a low operation voltage of about 3.3 V with respect to Li/Li⁺ is also pointed out as a problem.

LiNiO₂, which has a theoretical capacity per unit weight as large as 274 mAhg⁻¹, is attractive as a battery active material and the most expected material to be used in practice as a power supply for electric vehicles. However, LiNiO₂ has a bedded salt structure (α-NaFeO₂ structure) similarly to LiCoO₂. When lithium is released during charging, an oxygen layer which has large electronegativity comes next to it. Therefore, in practice, it is necessary to limit the extraction amount of lithium. If the extraction amount of lithium is excessively large like in an overcharge state, electrostatic repulsion occurs between oxygen layers to cause a structural change and heat is generated. Improvement is still required in terms of safety of a battery. To ensure safety of a battery, a large protective circuit is required for the exterior. As a result, energy density decreases.

LiMn₂O₄ has a normal spinel structure and a space group Fd3m. Accordingly, LiMn₂O₄ has a high potential of a 4 V level relative to a lithium electrode, equivalent to LiCoO₂, and has excellent features including ease of synthesis and high battery capacity. Because of this, LiMn₂O₄ has attracted attention as an extremely promising material and put into practical use. Although LiMn₂O₄ is an excellent material as described above, capacity drop during a high-temperature storage time is significant. Accordingly Mn is dissolved in an electrolyte, causing a problem in that fast-charging characteristics are not sufficient. This is caused by unstable trivalent Mn. It is presumed that when an average valence of Mn ions changes between trivalence and quadrivalence, Jahn-Teller distortion is generated in a crystal, with the result that stability of the crystal structure decreases, causing e.g., deterioration of performance.

In the circumstances, up to present, in order to enhance reliability of a battery, study has been made for improving structural stability by substituting trivalent Mn with another element. For example, Patent Literature 1 discloses a secondary battery including such a positive electrode active material. A positive electrode active material, in which trivalent Mn contained in LiMn₂O₄ is substituted with another metal, is disclosed. More specifically, Patent Literature 1 describes a secondary battery including a lithium manganese complex oxide which has a spinel structure and represented by formula, LiMₓMn₂₋ₓO₄ (M is one or more elements selected from Al, B, Cr, Co, Ni, Ti, Fe, Mg, Ba, Zn, Ge and Nb, and 0.01 ≤ x ≤ 1). Furthermore, an example where LiMn_{1.75}Al_{0.25}O₄ is used as a positive electrode active material is specifically disclosed.

However, as described above, if the amount of trivalent Mn is reduced by substituting it with another element, a decrease in discharge capacity becomes a problem. LiMn₂O₄ causes the following Mn valence change along with charge-discharge.

Li⁺Mn³⁺Mn⁴⁺O²₄ → Li⁺+Mn⁴⁺₂O²⁻₄+e⁻

As is apparent from the formula above, LiMn₂O₄ contains trivalent Mn and quadrivalent Mn. Of them, if trivalent Mn changes into quadrivalent Mn, discharge occurs. Accordingly, if trivalent Mn is substituted with another element, discharge capacity is inevitably reduced. More specifically, even if reliability of a battery is to be improved by enhancing the structural stability of a positive electrode active material, discharge capacity significantly reduces. Thus, it is difficult to achieve both characteristics. In particular, it is extremely difficult to obtain a highly reliable positive electrode active material providing a discharge capacity value of 130 mAh/g or more.

As described above, a positive electrode active material in which trivalent Mn contained in LiMn₂O₄ is substituted with another metal forms a lithium secondary battery which has an electromotive force of so-called 4 V level. As a technique in another direction to this technique, for example, Patent Literature 2 describes a study of increasing energy density by partly substituting Mn of LiMn₂O₄ with e.g., Ni, Co, Fe, Cu or Cr to thereby enhance a charge-discharge potential. These materials form a lithium secondary battery which has so-called 5 V-level electromotive force. Hereinafter, explanation will be made by way of LiNi_{0.5}Mn_{1.5}O₄ as an example. LiNi_{0.5}Mn_{1.5}O₄ causes the following Ni valence change along with charge-discharge.

Li⁺Ni²⁺_{0.5}Mn⁴⁺_{1.5}O²⁻₄ → Li⁺+Ni⁴⁺_{0.5}Mn⁴⁺_{1.5}O²⁻₄+e⁻

As is apparent from the formula above, if divalent Ni of LiNi_{0.5}Mn_{1.5}O₄ changes into quadrivalent Ni, discharge occurs. Mn causes no valance change. As described above, by changing the metal involved in charge-discharge from Mn to Ni, Co and the like, a high electromotive force of 4.5 V or more can be obtained.

Furthermore, Patent Literature 2 discloses a crystal of a spinel structure represented by LiMn_{2-y-z}Ni_{y}M_{z}O₄ (where M: at least one selected from the group consisting of Fe, Co, Ti, V, Mg, Zn, Ga, Nb, Mo and Cu, 0.25 ≤ y ≤ 0.6, 0 ≤ z ≤ 0.1) which is charged and discharged at a potential of 4.5 V or more with respect to a Li metal as a positive electrode active material. Patent Literature 4 discloses a 5 V-level positive electrode active material represented by general formula LiₐMn_{2-y-i-j-k}M_{y}M1ᵢM2ⱼM3ₖO₄ (where, M1: divalent cation, M2: trivalent cation, M3: quadrivalent cation, M: at least one type of transition metal element except Mn, i ≥ 0, j ≥ 0, k ≥ 0, i + j > 0) in which Mn of LiMn₂O₄ is substituted with another transition metal and further substituted with another element.

Patent Literature 3 discloses that use of LiₓTi_{5/3-y}L_{y}O₄ (L represents one or more types of transition metal elements except Ti, 4/3 ≤ x ≤ 7/3, 0 ≤ y ≤ 5/3) as a negative electrode active material of a lithium secondary battery and Liₘ[Ni₂₋ₙMnO₄] (M represents one or more types of transition metal elements except Ni, 1 ≤ m ≤ 2.1, 0.75 ≤ n ≤ 1.80) as a positive electrode active material improves storage characteristics such that energy density is enhanced and self-discharge is reduced. Patent Literature 4 discloses that use of Li₄Ti₅O₁₂ as a negative electrode active material of a lithium secondary battery and LiNi_{0.5}Mn_{1.5}O₄ as a positive electrode active material improves high temperature cycle. Another battery with lithium nickel manganese oxide as positive electrode and lithium titanate as negative electrode materials is disclosed in JP2007087875.

### Citation List

### Patent Literature

Patent Literature 1: JP2001-176557A
Patent Literature 2: JP2000-235857A
Patent Literature 3: JP2000-156229A
Patent Literature 4: JP2006-66341 A

### Summary of Invention

### Technical Problem

However, a lithium ion secondary battery prepared by use of the positive electrode active material and the negative electrode active material is insufficient in fast charge-discharge characteristics and further improvement is required.

In the case where a lithium ion secondary battery is used as a driving source for EV, HEV and the like, as a request from a user, it is required to reduce charging time, i.e., to enable fast-charge. A general lithium ion secondary battery is used in a charging condition of 1 to 3 hours to be fully charged. If the charging time can be shortened to, for example, about 10 to 15 minutes, convenience of a lithium ion secondary battery can be greatly enhanced. However, if the lithium ion secondary battery is fast charged in this manner, the characteristics of the lithium ion secondary battery are known to greatly deteriorate in a short period of use. The deterioration of characteristics of the chargeable battery appears specifically as a greatly irreversible reduction in discharge capacity (or energy density) for a few years. In short, a cut down of charging time of a lithium ion secondary battery and a reduction of the battery capacity are known to have a trade-off relationship. Note that a reduction rate of discharge capacity of a battery is generally expressed as a reduction of capacity retention rate.

Generally, to improve fast-charging characteristics of a lithium ion secondary battery to enable short-time charging, it is known to preferably use LiMn₂O₄ or LiNi_{0.5}Mn_{1.5}O₄ which has a spinel structure as a positive electrode active material and Li_{4/3}Ti_{5/3}O₄ having a spinel structure as a negative electrode active material. However, in the case where LiMn₂O₄ is used as a positive electrode active material, the valence of Mn³⁺ (manganese ion) as Jahn-Teller ion, changes between trivalence and quadrivalence, before and after charge-discharge. LiMn₂O₄ contains Mn³⁺ as Jahn-Teller ion concomitantly with Mn⁴⁺ as non Jahn-Teller ion in a ratio of 1 : 1, has a crystal lattice having a large inherent stress. Because of this, crystal distortion called Jahn-Teller distortion is generated within a crystal. By the crystal distortion, destabilization of the structure of a positive electrode active material may occur. Accordingly, the life of the material is a problem.

Furthermore, in the case where LiMn₂O₄ is used as a positive electrode active material and Li_{4/3}Ti_{5/3}O₄ is used as a negative electrode active material, since the operation voltage of Li_{4/3}Ti_{5/3}O₄ is as high as about 1.5 V, the energy density of a battery reduces compared to the case where graphite or an alloy is used as a negative electrode.

In the case where LiNi_{0.5}Mn_{1.5}O₄ is used as a positive electrode active material, since the operation potential of LiNi_{0.5}Mn_{1.5}O₄ with respect to Li is as high as about 4.7 V, even if Li_{4/3}Ti_{5/3}O₄ is used as a negative electrode, a battery having high energy density can be prepared. Furthermore, Li_{4/3}Ti_{5/3}O₄ has a reduction potential as high as about 1.5 V with respect to Li/Li⁺ and thus can suppress reductive decomposition of a nonaqueous electrolyte on a negative electrode surface. Moreover, in LiNi_{0.5}Mn_{1.5}O₄, since the valence of Ni²⁺ (nickel ion) as non Jahn-Teller ion changes between a divalence and quadrivalence before and after charge-discharge, a problem of destabilization of a crystal structure cannot occur.

However, in the case where water is slightly present in the electrolytic solution within a battery, the water reacts with a component of the electrolytic solution, i.e., a supporting electrolyte, to produce, H ion (hydrogen ion: H⁺). In the case LiPF₆ is used as a supporting electrolyte, the reaction represented by the following chemical equation is known to occur.

LiPF₆+H₂O → POF₃+Li⁺+3F⁻+2H⁺

If H⁺ is produced in this manner in the electrolytic solution, during long-term use, Mn or Ni of LiNi_{0.5}Mn_{1.5}O₄ of a positive electrode active material is ionized and dissolved in the electrolytic solution, causing a problem in that internal impedance of the lithium ion secondary battery irreversibly increases.

Furthermore, since Li_{4/3}Ti_{5/3}O₄ of the negative electrode has low electric conductivity and the diffusion constant of Li ion is low, further improvement is required for fast-charging characteristics.

The present exemplary embodiment solves the aforementioned problems of a lithium ion secondary battery and directed to providing a high-energy density lithium ion secondary battery having a low degree of capacity drop of a battery during fast-charge, since internal impedance does not greatly increase during fast-charge even in long-term use, in other words, a reduction of capacity retention rate during use is low.

### Solution to Problem

The lithium ion secondary battery according to the present exemplary embodiment is a lithium ion secondary battery including a positive electrode and a negative electrode, wherein
the positive electrode contains a lithium nickel manganese oxide represented by the following formula (I)

LiₓNiₐM1_{b}Mn_{2-a-b}O₄ (I)

(In formula (I), M1 represents at least one selected from the group consisting of Ti, Si, Co, Fe, Cr, Al, Mg, B and Li; 0 < x ≤ 1; 0.4 ≤ a ≤ 0.6; and 0 < b ≤ 0.4), and having a specific surface area of 0.2 m²g⁻¹ or more and 1 m²g⁻¹ or less; and
the negative electrode contains a lithium titanium oxide represented by the following formula (II)

Li_{y}Ti_{5/3-c}M2_{c}O₄ (II)

(in formula (II), M2 represents at least one selected from the group consisting of Ta, Zr and Cr; 4/3 ≤ y ≤ 7/3 and 0 < c < 0.1), and having a specific surface area of 4 m²g⁻¹ or more and 20 m²g⁻¹ or less.

### Advantageous Effects of Invention

According to the present exemplary embodiment, it is possible to provide a high-energy density lithium ion secondary battery having a low degree of capacity drop of a battery during fast-charge since internal impedance does not greatly increase during fast-charge even in long-term use, in other words, has a low reduction of capacity retention rate during use. Furthermore, according to the present exemplary embodiment, since the positive electrode active material and the negative electrode active material have high thermal stability, even if a battery fully charged is stored in high-temperature conditions, internal impedance can be still maintained at a low value. Therefore, the lithium ion secondary battery according to the present exemplary embodiment, even if the battery is placed in the condition where the interior temperature of the battery is high, can still keep the fast-charging characteristics of the battery.

### Brief Description of Drawings

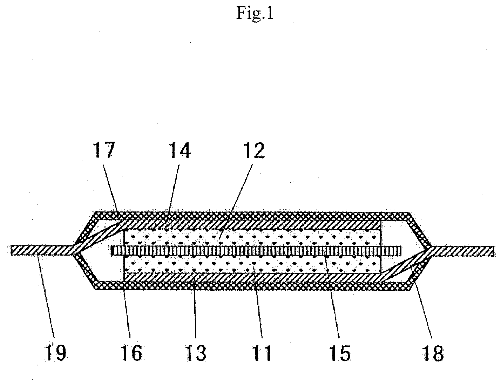

Figure 1 is a sectional view of an example of a lithium ion secondary battery according to the present exemplary embodiment.

### Description of Embodiments

The lithium ion secondary battery according to the present exemplary embodiment will be described. The lithium ion secondary battery according to the present exemplary embodiment is a lithium ion secondary battery including a positive electrode and a negative electrode, wherein the positive electrode contains a lithium nickel manganese oxide represented by the following formula (I)

LiₓNiₐM1_{b}Mn_{2-a-b}O₄ (I)

(In formula (I), M1 represents at least one selected from the group consisting of Ti, Si, Co, Fe, Cr, Al, Mg, B and Li; 0 < x ≤ 1; 0.4 ≤ a ≤ 0.6; and 0 < b ≤ 0.4), and having a specific surface area of 0.2 m²g⁻¹ or more and 1 m²g⁻¹ or less; and
the negative electrode contains a lithium titanium oxide represented by the following formula (II)

Li_{y}Ti_{5/3-c}M2_{c}O₄ (II)

(in formula (II), M2 represents at least one selected from the group consisting of Ta, Zr and Cr; 4/3 ≤ y ≤ 7/3 and 0 < c < 0.1), and having a specific surface area of 4 m²g⁻¹ or more and 20 m²g⁻¹ or less. The lithium ion secondary battery has high energy density and capable of fast charge-discharge.

In the present exemplary embodiment, the specific surface area of a lithium nickel manganese oxide serving as a positive electrode active material is 0.2 m²g⁻¹ or more and 1 m²g⁻¹ or less. The reason why the specific surface area of the positive electrode active material is defined as described above is that the interface reaction site between an electrolyte and an electrode is limited. If the specific surface area of the positive electrode active material exceeds 1 m²g⁻¹, elution of Ni or Mn easily occurs at the interface between the electrolyte and the positive electrode active material. In contrast, if the lower limit value of the specific surface area of the positive electrode active material is less than 0.2 m²g⁻¹, since the particle size of the positive electrode active material increases, the positive electrode active material causes precipitation separation in preparing slurry for an electrode, with the result that it is difficult to form a uniform electrode by coating. Note that, in the present exemplary embodiment, the specific surface area refers to a B.E.T. specific surface area. The B.E.T. specific surface area is a specific surface area calculated from the amount of molecule whose adsorption area is known adsorbed to the surface of a powder particle at the temperature of liquid nitrogen. In the present exemplary embodiment, B.E.T. specific surface area is specified as a value measured by gas adsorption-amount measuring apparatus "QS-18" (trade name, manufactured by Quantachrome Instruments). The specific surface area of a lithium nickel manganese oxide serving as a positive electrode active material is preferably 0.2 m²g⁻¹ or more and 0.7 m²g⁻¹ or less, and more preferably 0.2 m²g⁻¹ or more and 0.6 m²g⁻¹ or less.

The specific surface area of a lithium titanium oxide serving as a negative electrode active material is 4 m²g⁻¹ or more and 20 m²g⁻¹ or less. The reason why the specific surface area of the negative electrode active material is specified as described above is that the contact area between the negative electrode active materials or between the negative electrode active material and a conductivity imparting agent is limited. If the specific surface area of the negative electrode active material exceeds 20 m²g⁻¹, the particle size of the negative electrode active material becomes very fine and aggregation easily occurs, with the result that the specific surface area of the portion in contact with an electrolyte tends to reduce. Furthermore, if the specific surface area of the negative electrode active material is less than 4 m²g⁻¹, the contact area between the negative electrode active material and the conductivity imparting agent reduces, with the result that fast-charging characteristics deteriorate. The specific surface area of a lithium titanium oxide serving as a negative electrode active material is preferably 5 m²g⁻¹ or more and 16 m²g⁻¹ or less, and more preferably 5 m²g⁻¹ or more and 13 m²g⁻¹ or less.

In the present exemplary embodiment, a part of Ni or Mn of a lithium nickel manganese oxide serving as a positive electrode active material is substituted with M1, which is at least one selected from the group consisting of Ti, Si, Co, Fe, Cr, Al, Mg, B and Li to thereby stabilize its crystal structure. By stabilizing the crystal structure, elution of Ni and Mn is suppressed to realize a reduction of internal impedance of the lithium ion secondary battery. Furthermore, by substituting a part of Ni or Mn with M1, the weight of the positive electrode active material can be reduced to improve energy density. M1 is preferably at least one selected from the group consisting of Ti, Si, Fe and Cr.

In formula (I), value b representing the substitution amount of Ni or Mn with M1 falls within the range of 0 < b ≤ 0.4. This is because the larger the amount of M1 serving as a substitution element, the better to sufficiently exert the aforementioned effect; however, if the value of b deviates from the range, the electrode potential of a positive electrode reduces and fast-charging characteristics significantly reduce. The value b preferably falls within the range of 0.05 ≤ b ≤ 0.45, and more preferably falls within the range of 0.1 ≤ b ≤ 0.3.

In formula (I), value x representing the amount of lithium ion falls within the range of 0 < x ≤ 1. The reason why the range is specified as x > 0 is that it is difficult to electrochemically extract lithium ion equal or more than that. In contrast, the reason why the range is specified as x ≤ 1 is that if a battery is discharged until x > 1 and then recharged at 4 V or more, the crystal structure of the positive electrode active material significantly changes and fast-charging characteristics significantly reduce.

In formula (I), value a representing the amount of Ni falls within the range of 0.4 ≤ a ≤ 0.6. The reason why the range is specified as 0.4 ≤ a ≤ 0.6 is that if the value a deviates from the range, the electrode potential of a positive electrode reduces and capacity of a high potential portion significantly reduces. The value a preferably falls within the range of 0.42 ≤ a ≤ 0.58, and more preferably 0.45 ≤ a ≤ 0.55.

In the present exemplary embodiment, a part of Ti of a lithium titanium oxide serving as a negative electrode active material is substituted with M2, which is at least one selected from the group consisting of Ta, Zr and Cr, to thereby stabilize a crystal structure or improve the electric conductivity of the negative electrode active material. By stabilizing a crystal structure and improving the electric conductivity, fast-charging characteristics can be improved.

In formula (II), value c representing the substitution amount of Ti with M2 falls within the range of 0 < c < 0.1. This is because the larger the amount of substitution element M2, the better to sufficiently exert the aforementioned effect; however, if the value c deviates from the range, fast-charging characteristics reduce. The value c preferably falls within the range of 0.01 ≤ c ≤ 0.08, and more preferably 0.02 ≤ c ≤ 0.05.

In formula (II), value y representing the amount of lithium ion falls within the range of 4/3 ≤ y ≤ 7/3. The reason why the range is specified as y ≥ 4/3 is that it is difficult to electrochemically extract lithium ions until y < 4/3 without destroying a spinel type crystal structure. In contrast, the reason why the range is specified as y ≤ 7/3, is that if a battery is charged until y > 7/3 and then discharged again, the crystal structure of the negative electrode active material significantly changes and fast-charging characteristics significantly reduce.

Figure 1 shows a sectional view of an example of a lithium ion secondary battery according to the present exemplary embodiment. This is a lithium ion secondary battery including a positive electrode containing a positive electrode active material and a secondary battery including a single-plate laminate type battery cell. In Figure 1, the positive electrode includes a positive electrode active material 11 and a positive electrode collector 13, and the negative electrode includes a negative electrode active material 12 and a negative electrode collector 14. Herein, the positive electrode active material 11 and the negative electrode active material 12 face each other with a separator 15 interposed between them. The positive electrode collector 13 and the negative electrode collector 14 are generally formed of metal foil. Onto one of the surfaces of the respective collectors, the positive electrode active material 11 and the negative electrode active material 12 are applied and solidified. An end portion of the positive electrode collector 13 and an end portion of the negative electrode collector 14 are pulled out of the battery cell and serve as a positive electrode tab 18 and a negative electrode tab 19, respectively. The battery cell is sealed by outer-package laminates 16, 17 from above and below thereof. The interior portion of the sealed battery cell is filled with an electrolytic solution. As the electrolytic solution, a nonaqueous organic electrolytic solution dissolving a lithium salt as a supporting electrolyte can be used.

Note that, the lithium ion secondary battery according to the present exemplary embodiment is basically not limited in shape. As long as a positive electrode and a negative electrode are configured to face each other with a separator interposed between them, an electrode shape such as a rolled type or a laminate type can be used. Furthermore, as a structure of a battery cell, not only the single-plate laminate type but also a coin-type, a laminate pack-type, a rectangular cell, a cylindrical cell and the like can be used.

Generally, a lithium ion secondary battery has a positive electrode containing a lithium compound serving as a positive electrode active material and a negative electrode containing a negative electrode active material capable of absorbing and desorbing lithium ions, and a nonconductive separator and an electrolyte region are provided between the positive electrode and the negative electrode so as to avoid electrical connection between both electrodes. Herein, the positive electrode and the negative electrode are both kept in an electrolytic solution which has lithium ion conductivity while being soaked therein. These components are sealed in a container. When voltage is externally applied between the positive electrode and negative electrode forming a battery, lithium ions are released from the positive electrode active material, passed through the electrolytic solution and absorbed by the negative electrode active material to provide a charge state. Furthermore, when the positive electrode and the negative electrode are electrically connected by way of a load outside the battery, lithium ions are in turn released from the negative electrode active material and absorbed by the positive electrode active material in the reverse manner as in charging time. In this manner, the battery is discharged.

Next, a method for manufacturing the lithium ion secondary battery according to the present exemplary embodiment will be described. In manufacturing a lithium nickel manganese oxide serving as a positive electrode active material, the following raw materials can be used. As a Li raw material, Li₂CO₃, LiOH, LiNO₃, Li₂O, Li₂SO₄ and the like can be used. Of them, particularly Li₂CO₃ and LiOH are preferable. As a Ni raw material, NiO, Ni (OH)₂, NiSO₄, Ni (NO₃)₂ and the like can be used. As a Mn raw material, various Mn oxides such as electrolytic manganese dioxide (EMD), Mn₂O₃, Mn₃O₄, CMD (Chemical Manganese Dioxide), MnCO₃, MnSO₄, Mn (CH₃COO)₂ and the like can be used. As a Ti raw material, TiO₂ and the like can be used. As a Co raw material, CoO, Co₃O₄, CoCl₂, Co (OH)₂, CoSO₄, CoCO₃, Co (NO₃)₂ and the like can be used. As an Fe raw material, Fe₂O₃, Fe₃O₄, Fe (OH)₂, FeOOH and the like can be used. As a Cr raw material, Cr (NO₃)₃, Cr₂O₃, Cr₂ (CO₃)O₃ and the like can be used. As an Al raw material, Al (OH)₃, Al (CH₃COO)₃ and the like can be used. As an Mg raw material, Mg (OH)₂, Mg (CH₃COO)₂ and the like can be used. As a B raw material, B₂O₃ and the like can be used. As a Si raw material, SiO, SiO₂ and the like can be used. These raw materials for each element may be used alone or in combination of two or more types.

These raw materials are weighed so as to satisfy a desired metal composition ratio, pulverized and mixed by a mortar, a ball mill, a jet mill and the like. The obtained powder mixture is baked at a temperature from 600°C to 950°C in air or in oxygen to obtain a positive electrode active material. The higher the baking temperature, the more preferable, in order to diffuse individual elements. However, if the baking temperature is excessively high, oxygen deficiency occurs and battery characteristics may possibly deteriorate. From this, the baking temperature is preferably 600°C to 850°C. Furthermore, to prevent occurrence of oxygen deficiency, baking is preferably performed in an oxygen atmosphere. Note that, as a method for controlling the specific surface area of the positive electrode active material to be 0.2 m²g⁻¹ or more and 1 m²g⁻¹ or less, a method for controlling the specific surface area so as to fall within the range by separately controlling an Li amount and baking temperature can be mentioned.

In manufacturing a lithium titanium oxide serving as a negative electrode active material, the following raw materials can be used. As a Li raw material, Li₂CO₃, LiOH, LiNO₃, Li₂O, Li₂SO₄ and the like can be used. Of them, particularly Li₂CO₃ and LiOH are preferable. As a Ti raw material, TiO₂ and the like can be used. As a Ta raw material, Ta₂O₅ and the like can be used; as a Zr raw material, ZrO₂ and the like; as a Cr raw material, CrO₂ and the like; as a Ni raw material, NiO and the like; and as a V raw material, VO₂ and the like. Each of the raw materials for these elements may be used alone or in combination of two or more types.

These raw materials are weighed so as to satisfy a desired metal composition ratio and pulverized and mixed by a mortar, a ball mill, a jet mill and the like. The obtained powder mixture is baked at a temperature from 600°C to 1000°C in air or in oxygen to obtain a negative electrode active material. The higher the baking temperature, the more preferable, in order to diffuse individual elements. However, if the baking temperature is excessively high, oxygen deficiency occurs and battery characteristics may possibly deteriorate. From this, the baking temperature is preferably 750°C to 900°C. Furthermore, to prevent occurrence of oxygen deficiency, baking is preferably performed in an oxygen atmosphere. Note that, as a method for controlling the specific surface area of the negative electrode active material to be 4 m²g⁻¹ or more and 20 m²g⁻¹ or less, a method for controlling the specific surface area so as to fall within the range by separately controlling the Li amount and baking temperature can be mentioned.

Whether powdery positive electrode active material and negative electrode active material thus prepared each have a predetermined crystal structure or not can be evaluated by powder X-ray diffraction. Powdery lithium compounds are each set in a powder X-ray diffraction apparatus and irradiated with characteristic X-ray. The diffraction angle and intensity of the obtained diffraction light are measured. The obtained results are referred to ICDD Cards (International Centre for Diffraction Data Cards: cards of powder X-ray diffraction pattern database) to identify its crystal structure. In the case of the present exemplary embodiment, diffraction patterns of the obtained powdery positive electrode active material and negative electrode active material are compared to the diffraction patterns of crystal structures of Liₓ(NiₐMn_{2-a-b}M1_{b})O₄ and Li_{y}Ti_{(5-c)/3}M2_{c}O₄, respectively and diffraction intensities thereof are measured. In this manner, the crystal structures and the crystallization rates of the produced compounds can be specified.

In preparing a positive electrode for a lithium ion secondary battery, the obtained positive electrode active material, a conductivity imparting agent, a binder and a solvent are mixed and applied onto a surface of a positive electrode collector in the form of film, dried and hardened. As the conductivity imparting agent, not only a carbon material such as acetylene black, carbon black, graphite and fibrous carbon but also a metal substance such as Al, a conductive oxide powder and the like can be used. These may be used alone or in combination of two or more types. As the binder, not only polyvinylidene fluoride (PVDF) but also a fluorine rubber and the like can be used. Specific examples of the fluorine rubber may include vinylidene fluoride-hexafluoropropylene (VDF-HFP) copolymers, vinylidene fluoride-hexafluoropropylene-tetrafluoroethylene (VDF-HFP-TFE) copolymers, vinylidene fluoride-pentafluoropropylene (VDF-PFP) copolymers, vinylidene fluoride-pentafluoropropylene-tetrafluoroethylene (VDF-PFP-TFE) copolymers, vinylidene fluoride-perfluoromethylvinylether-tetrafluoroethylene (VDF-PFMVE-TFE) copolymers, ethylene-tetrafluoroethylene copolymers and propylene-tetrafluoroethylene copolymers. Furthermore, fluorine-containing polymer in which hydrogen of the main chain is substituted with an alkyl group can be used. These may be used alone or in combination of two or more types. As the positive electrode collector, a metal thin film mainly formed of aluminum and an aluminum alloy, titanium and the like can be used.

Herein, the preferable addition amount of conductivity imparting agent is 0.5 to 30 mass% relative to the total amount of positive electrode active material, conductivity imparting agent and binder except a solvent. The preferable addition amount of binder is 1 to 10 mass% relative to the same total amount as above. Herein, if addition amounts of conductivity imparting agent and binder to be mixed are less than 0.5 mass% and 1 mass%, respectively, the electric conductivity of the formed positive electrode active material layer reduces, with the result that the charge-discharge rate characteristics (a rate for charging-discharging a constant amount of charge) of the battery deteriorate and peeling of an electrode may occur. Conversely, if the addition amounts of conductivity imparting agent and binder exceed 30 mass% and 10 mass%, respectively, the content ratio of the positive electrode active material decreases, with the result that the energy density of the prepared lithium ion secondary battery decreases and the charging capacity per unit weight of the battery may reduce. The content ratio of the positive electrode active material is preferably 70 mass% or more and 98.5 mass% or less relative to the aforementioned total amount, and more preferably, 85 mass% or more and 97 mass% or less.

The density of the positive electrode active material in the positive electrode active material layer formed by applying a positive electrode active material to a surface of a positive electrode collector is preferably 1 g/cm³ or more and 4.5 g/cm³ or less, and more preferably, 2 g/cm³ or more and 4 g/cm³ or less. If the density of the positive electrode active material layer exceeds 4.5 g/cm³, the number of voids in the positive electrode active material layer decreases. Because of this, it may be difficult for an electrolytic solution, which fills the space around the positive electrode of a lithium ion secondary battery, to enter the voids of the positive electrode. As a result, the amount of Li ions to be transferred decreases and thus charge-discharge rate characteristics of a battery may possibly deteriorate. In contrast, if the density of positive electrode active material layer is less than 1 g/cm³, the energy density of the prepared lithium ion secondary battery may possibly decrease similarly to the aforementioned case where the content ratio of the positive electrode active material in the positive electrode active material layer is low.

In preparing a negative electrode for a lithium ion secondary battery, the obtained negative electrode active material, a conductivity imparting agent, a binder and a solvent are mixed and applied to a surface of a negative electrode collector in the form of film, dried and hardened. As the conductivity imparting agent, the same conductivity imparting agents as exemplified in preparing the positive electrode can be used. As the binder, not only polyvinylidene fluoride (PVDF) but also a thermoplastic resin such as tetrafluoroethylene, polyvinylidene fluoride, polyethylene, polypropylene, ethylene-propylene-diene terpolymer (EPDM), sulfonated EPDM, styrene butadiene rubber (SBR) and a fluorine rubber as mentioned above and carbomethoxy cellulose and a polymer which has rubber elasticity and the like can be used. These may be used alone or in combination of two or more types. As the negative electrode collector, a metal thin film mainly formed of copper, nickel or the like can be used.

Preferable addition amounts of negative electrode active material, conductivity imparting agent and binder are the same as the preferable addition amounts of positive electrode active material, conductivity imparting agent and binder used in preparing the positive electrode.

The density of the negative electrode active material in the negative electrode active material layer formed by applying a negative electrode active material onto a surface of a collector is preferably 2 g/cm³ or more and 2.5 g/cm³ or less. The reason why this range is preferable is the same as described as to the density of the positive electrode active material.

As the electrolytic solution according to the lithium ion secondary battery in the present exemplary embodiment, an aprotonic organic solvent is preferably used. Examples of the aprotonic organic solvent include cyclic carbonates such as ethylene carbonate (EC), propylene carbonate (PC), butylene carbonate (BC) and vinylene carbonate (VC); linear carbonates such as dimethyl carbonate (DMC), ethyl methyl carbonate (EMC), diethyl carbonate (DEC) and dipropyl carbonate (DPC); aliphatic carboxylic acid esters such as methyl formate, methyl acetate and ethyl propionate; γ-lactones such as γ-butyrolactone; linear ethers such as 1,2-diethoxyethane (DEE) and ethoxymethoxyethane (EME); cyclic ethers such as tetrahydrofuran, and 2-methyltetrahydrofuran; dimethyl sulfoxide, 1,3-dioxolane, formamide, acetamide, dimethylformamide, acetonitrile, propylnitrile, nitromethane, ethyl monoglyme, phosphotriester, trimethoxymethane, a dioxolane derivative, sulfolane, methyl sulfolane, 1,3-dimethyl-2-imidazolidinone, 3-methyl-2-oxazolidinone, a propylene carbonate derivative, a tetrahydrofuran derivative, ethyl ether, 1,3-propanesultone, anisole, N-methyl-2-pyrrolidone (NMP), fluorinated carboxylic acid ester and fluorinated phosphoric acid ester. These can be used alone or as a mixture of two or more types.

Furthermore, a polymer or the like may be added to the aprotonic organic solvent to thereby solidify an electrolytic solution like gel. Such a gelatinized electrolytic solution may be used. Furthermore, a molten salt at normal temperature and an ionic liquid represented by e.g., a cyclic ammonium cation and anion may be used. Of these electrolytic solutions, a mixture of a cyclic carbonate and a linear carbonate is particularly preferably used in view of e.g., conductivity and stability under high voltage.

To these electrolytic solutions, a lithium salt can be used as a supporting electrolyte by dissolving it. Examples of the lithium salt include LiPF₆, LiAsF₆, LiAlCl₄, LiClO₄, LiBF₄, LiSbF₆, LiBOB (Lithium bis (oxalate)borate), LiCF₃SO₃, LiC₄F₉SO₃, LiC(CF₃SO₂)₃, LiN(CF₃SO₂)₂, LiN(C₂F₅SO₂)₂, LiCH₃SO₃, LiC₂H₅SO₃, LiC₃H₇SO₃, a lower aliphatic lithium carboxylate and other lithium carboxylates, chloroborane lithium, lithium tetraphenylborate, LiBr, LiI, LiSCN, LiCl and LiF. These may be used alone or in combination of two or more types. The electrolyte concentration of the supporting electrolyte dissolved is preferably 0.5 mol/l or more and 1.5 mol/l or less. If the electrolyte concentration of the supporting electrolyte is higher than 1.5 mol/l, the density and viscosity of the electrolytic solution increase and movement of Li ions may possibly be prevented. Conversely, if the electrolyte concentration is lower than 0.5 mol/l, the electric conductivity of the electrolytic solution may possibly reduce.

As the separator used in the lithium ion secondary battery of the present exemplary embodiment, a polymer film such as a propylene film is preferably used.

The lithium ion secondary battery according to the present exemplary embodiment can be prepared, for example, by the following method. A positive electrode active material and a negative electrode active material are respectively formed by the aforementioned method on surfaces of a positive electrode collector and a negative electrode collector to form a positive electrode and a negative electrode. Then, a separator is sandwiched between both electrodes to form a laminate serving as an electrode assembly. The electrode assembly is placed together with an electrolytic solution in a film structure or the like, which is formed by laminating a synthetic resin and metal foil and sealed in dry air or an inert gas atmosphere to prepare a lithium ion secondary battery including a single-plate laminate type cell. Alternatively, the electrode assembly is further rolled to form a rolled structure, housed in a battery can in the same dry air or an inert gas atmosphere, filled with an electrolytic solution and sealed to prepare a lithium ion secondary battery which has a cylindrical or rectangular cell shape.

The potential of the positive electrode of the lithium ion secondary battery prepared herein is preferably 5.5 V or less relative to the potential of Li. Generally, a lithium ion secondary battery has a tendency in that decomposition of the electrolytic solution proceeds if a positive electrode potential is high. The potential of the positive electrode is more preferably 5.3 V or less to keep reliability of a battery when the battery is repeatedly charged and discharged or stored particularly at a high temperature of 60°C or more. In contrast, the potential of the negative electrode is preferably 1 V or more relative to the potential of Li.

### Examples

Examples of the present exemplary embodiment will be described below. Lithium ion secondary batteries were prepared by changing the specific surface area and composition of each of a positive electrode active material and a negative electrode active material and regarded as Examples and Comparative Examples, respectively. These lithium ion secondary batteries all have a same shaped single-plate laminate type cell. These lithium ion secondary batteries were stored at a high temperature and evaluated for reduction of discharge capacity. Methods for preparing and evaluating lithium ion secondary batteries of Examples and Comparative Examples will be described below.

### (Preparation of positive electrode active material)

Li₂CO₃ was used as a Li raw material. As raw materials except Li, NiO, MnO₂, TiO₂, SiO₂, CoO, Fe₂O₃, Cr₂O₃, Al₂O₃, MgO and B₂O₃ were used. Raw materials for Li₂CO₃, NiO, MnO₂ and M1 were weighed so as to satisfy desired composition ratios, respectively, pulverized and mixed. After the raw materials were mixed, the resultant powder was baked at a temperature within the range of 750 to 950°C for 9 hours. Thereafter, the powder was passed through a sieve of 30 µm mesh to remove crude particles from the mixture to obtain a powder of a positive electrode active material. It was confirmed by powder X-ray diffraction that the positive electrode active material has a virtually single-phase spinel structure. The specific surface area of the positive electrode active material was measured by using a gas adsorption-amount measuring apparatus "QS-18" (trade name, manufactured by Quantachrome Instruments). This method for measuring a specific surface area is similarly applied to the case of a negative electrode active material described later.

### (Preparation of positive electrode)

The powder of the positive electrode active material obtained in the above step and a conductivity imparting material were dispersed in a solution in which a binder was dissolved in an organic solvent and kneaded to obtain slurry. As the conductivity imparting material, carbon black as a carbon material was used. As the binder, polyvinylidene fluoride (PVDF) was used. As the organic solvent, N-methyl-2-pyrrolidone (NMP) was used. The mass ratio of the positive electrode active material, conductivity imparting material, and binder were 90 : 6 : 4. The slurry prepared was applied to a positive electrode collector having a thickness of 20 µm and formed of aluminum (Al) foil to form a positive electrode active material layer in the form of laminate. At this time, the thickness of the positive electrode active material layer to be formed by coating was controlled such that the initial charging capacity (the amount of charge accumulated in a battery in fully charging the battery assembled and not yet charged, for the first time) per unit area of the positive electrode to be prepared was 2.0 mAh/cm². Thereafter, the laminate prepared was solidified by drying it in vacuum for 12 hours to obtain a positive electrode material. The positive electrode material was cut into square pieces of 20 mm in length and 20 mm in width. Thereafter, the pieces were compressed at a pressure of 3t/cm² and molded to prepare a positive electrode.

### (Preparation of negative electrode active material)

LiOH was used as a Li raw material. As raw materials except Li, TiO₂, Ta₂O₅, ZrO₂, CrO₂, NiO and VO₂ were used. The raw materials for LiOH, TiO₂ and M2 were weighed so as to obtain desired composition ratios, respectively, pulverized and mixed. After the raw materials were mixed, the resultant powder was baked at a temperature within the range of 700 to 1000°C for 12 hours. Thereafter, the mixture was passed through a sieve of 2 µm mesh to remove crude particles from the mixture to obtain a powder of the negative electrode active material. It was confirmed by powder X-ray diffraction the same as described above that the negative electrode active material has a virtually single-phase spinel structure.

### (Preparation of negative electrode)

The powder of the negative electrode active material obtained in the above step and a conductivity imparting material were dispersed in a solution in which a binder was dissolved in an organic solvent and kneaded to obtain slurry. As the conductivity imparting material, carbon black as a carbon material was used. As the binder, polyvinylidene fluoride (PVDF) was used. As the organic solvent, N-methyl-2-pyrrolidone (NMP) was used. Next, the slurry prepared was applied to a negative electrode collector which has a thickness of 10 µm and formed of copper (Cu) foil to form a negative electrode active material layer in the form of laminate. At this time, the thickness of the negative electrode active material layer to be formed by coating was controlled such that the initial charging capacity per unit area of the negative electrode to be prepared was 2.6 mAh/cm². Thereafter, the laminate prepared was solidified by drying it in vacuum for 12 hours similarly to the case of the positive electrode material to obtain a negative electrode material. The negative electrode material was cut into square pieces of 22 mm in length and 22 mm in width. Thereafter, the pieces were compressed at a pressure of 1t/cm² and molded to prepare a negative electrode.

### (Preparation of electrolytic solution)

As an organic solvent, a mixture of ethylene carbonate (EC), propylene carbonate (PC) and dimethyl carbonate (DMC) in a volume ratio of 25: 5 : 70 was used. In the organic solvent, LiPF₆ and LiBOB were dissolved as a supporting electrolyte to prepare an electrolytic solution for use in a lithium ion secondary battery. The concentrations of LiPF₆ and LiBOB as a supporting electrolyte were 0.9 mol/l and 0.3 mol/l, respectively.

### (Assembly of lithium ion secondary battery)

The positive electrode and negative electrode prepared in the aforementioned methods were arranged such that the positive electrode active material layer and the negative electrode active material layer face each other with a separator sandwiched between them and installed within a battery cell as a laminate cell. Herein, as the separator, a polypropylene film as an insulator was used and shaped so as to have a larger area than either one of the positive electrode and the negative electrode. Thus, the positive electrode and the negative electrode are insulated from each other by the separator. Next, an Al tab, which is a pull-out lead to the exterior of the battery, was connected to an end portion of the positive electrode collector and similarly an pull-out lead which is a nickel (Ni) tab was connected to an end portion of the negative electrode collector. The tip of each tab was arranged so as to pull out from the laminate cell of the battery. Subsequently, the interior portion of the laminate cell of the battery is filled with the electrolytic solution and the laminate cell was sealed to assemble a lithium ion secondary battery including a single-plate laminate type battery cell. Note that 10 lithium ion secondary batteries each having a positive electrode active material of the same composition were prepared by a series of assembly steps as mentioned above.

### (Evaluation of lithium ion secondary battery)

The following evaluation of the lithium ion secondary battery prepared in the aforementioned steps was performed. First, the lithium ion secondary battery prepared was initially charged to a full charge in a constant-current constant-voltage mode at the upper limit voltage of 3.4 V and the current value of 1.6 mA (initial charge). Subsequently, the lower limit voltage was set at 1.5 V and the battery was discharged at a constant current (initial discharge). Note that, the discharge capacity (the amount of charge taken out from the battery by initial discharge) herein is defined as the initial discharge capacity.

After the initial charge-discharge, the battery was charged again in the same charging conditions as in the initial charge to obtain a full charge state. The battery of the full charge state was stored at 60°C and stored for 90 days without change. After completion of the storage, the battery was once discharged to the same lower limit voltage of 1.5 V as above at a constant current of 1.6 mA in an atmosphere of 20°C and thereafter fast charged to an upper limit voltage of 3.4 V at a current value of 80 mA which is a current density 50 times as large as that of the initial charge in a constant-current constant-voltage mode for 15 minutes. Thereafter, the battery was again discharged at a constant current of 1.6 mA up to the lower limit voltage of 1.5 V. The discharge capacity at this time was measured. This is defined as a post-storage discharge capacity. The ratio of a post-storage discharge capacity to the initial discharge capacity in each battery was measured. In the case where the specific surface area and composition of each of a positive electrode active material and a negative electrode active material were changed, how the value of the ratio of the discharge capacity is changed was evaluated, respectively.

Herein, as described above, the initial charging capacity of each battery is set at a constant value of 2.0 mAh/cm², respectively. Furthermore, the size of the positive electrode of each battery for trapping and releasing Li ions is 20 mm in length and 20 mm in width. Accordingly, the initial charging capacities of batteries are all the same value of 8 mAh. Because of this, if each battery was charged at a constant current of 8 mA, the battery can be almost fully charged in one hour. Hereinafter, charging performed at a constant current of 8 mA will be expressed as 1C. However, since an upper limit voltage is set in charging, each battery is actually charged in accordance with a constant-current constant-voltage mode, in which at the time the charge voltage reaches the upper limit voltage, constant-voltage charging is started. Accordingly, for example, a battery is initially charged at a constant current of 80 mA. When the voltage reaches the upper limit voltage, a battery is charged at a constant-voltage. If a battery is charged for 15 minutes in total in this manner, this is called as 10C, 15 minute constant-current constant-voltage charging. Assuming that, in an evaluation, a lithium ion secondary battery is stored at 60°C for 90 days, discharged and then fast charged at a current value of 80 mA for 15 minutes, the fast charge at this time is 10C, 15 minute constant-current constant-voltage charging.

In accordance with the preparation conditions as mentioned above, lithium ion secondary batteries were prepared by changing the specific surface area and a composition of a positive electrode active material and a negative electrode active material to obtain batteries of Examples and Comparative Examples. Subsequently, each of the batteries was initially charged, initially discharged, recharged, and stored at a high temperature of 60°C for 90 days and then discharged, fast charged and further discharged. The values of the discharged capacities after the storage relative to the initial discharge capacities were measured, and the ratio of the discharge capacity after the storage relative to the initial discharge capacity (hereinafter, referred to as capacity retention rate) was evaluated. The evaluation results are respectively shown in Table 1 to Table 7. In each table, the composition of each lithium compound in the positive electrode active material forming each lithium ion secondary battery, the capacity retention rate value (unit%) in each composition and evaluation (A and B) are shown. Note that 10 lithium ion secondary batteries were each evaluated per composition. The capacity retention rate value of a battery per composition is an average of measurement values of the 10 batteries.

### (Evaluation Criteria)

In Table 1 to Table 7 shown below, Examples and Comparative Examples showing a capacity retention rate value of 50% or more were evaluated as satisfactory (Judgement A), those showing a capacity retention rate value of less than 50% were evaluated as defective (Judgment B). The judgment was made in accordance with the criteria standardized in JIS (Japanese industry standards) C8711 "lithium secondary batteries for potable appliances". In the standard, the following test method is described as the standard on capacity recovery of a lithium ion secondary battery to be satisfied after long-term storage. A battery is once charged and discharged and then charged up to a 50% charge state. The battery is stored at this state in the conditions of an ambient temperature of 40 ± 2°C for 90 days. Then, the battery is discharged and charged once and discharged at a constant current (0.2C) and at an ambient temperature of 20 ± 5°C. The final discharge capacity being 50% or more of the discharge capacity of the initial charge-discharge time (capacity recovery of 50% or more after long-term storage) is required by the standard of long-term storage.

According to comparison between the evaluation method for a lithium ion secondary battery of the present exemplary embodiment and the evaluation method described in JIS C8711, conditions such as the storage period (90 days) of a battery and the ambient temperature (20°C) in measuring discharge capacity after storage of the battery and the like are equivalent. However, the standard for evaluation by the present exemplary embodiment is said to be more severe than that by JIS C8711 in point of temperature during storage (the present Examples: 60°C, JIS C8711: 40°C), charging capacity during storage (the present Examples: full charge, JIS C8711: 50% charge), and so on.

This is because it has been confirmed that, generally, a lithium ion secondary battery, if it is stored at a higher temperature and stored at a high charging rate, deteriorates more speedily. Furthermore, a charging method after high temperature storage for 90 days is not particularly defined in JIS C8711. If it is interpreted that a general charging method may be employed as this, the charging may be regarded as 1C charging. In contrast, in an evaluation of the present Examples, a battery is fast charged at 10C for 15 minutes as a charging method after high temperature storage. In this case, if the internal impedance of a battery is greatly increased by high temperature storage for 90 days, the capacity of the battery charged within 15 minutes will drop. This will appear as a significant reduction of capacity retention rate. Accordingly, in the method for evaluating a capacity retention rate before and after high temperature storage, the present Examples employ the same evaluation criteria as JIS C8711 in the case where 50% or more is judged as satisfactory; however, due to its severe content of the actual test, the standard of Examples substantially far exceeds the standard of JIS C8711,.

As described above, the reason why a battery evaluation method, which uses more severe standard than the general method defined in the Japanese industrial standards, was employed in the present Examples is that recently, users require to develop a product satisfying more severe standard than ever with respect to maintenance of charging capacity during long-term use as a lithium ion secondary battery to be installed particularly in potable electronic appliances. A lithium ion secondary battery satisfying evaluation criteria employed in the present Examples has more excellent characteristics with respect to the capacity retention rate during long-term storage. To satisfy such high-level requirement with respect to the capacity retention rate, the present exemplary embodiment more specifically specified the constitutions of a positive electrode active material and a negative electrode active material thereof to thereby obtain more excellent characteristics.

### (Reference Examples -not according to the invention - 1 to 11, Comparative Examples 1 to 7)

Batteries were prepared by fixing the compositions of a positive electrode active material and a negative electrode active material forming a lithium ion secondary battery and changing the specific surface area of each lithium compound to obtain batteries of Examples 1 to 11 and Comparative Examples 1 to 7, respectively. Evaluation results of capacity retention rates of these batteries are shown in Table 1. Herein, the compositions of the positive electrode active material and the negative electrode active material are LiNi_{0.5}Mn_{1.5}O₄ and Li_{4/3}Ti_{5/3}O₄, respectively. Furthermore, the positive electrode active material and the negative electrode active material were prepared while appropriately controlling the baking temperature so as to obtain a predetermined specific surface area.

**[Table 1]**

| | LiNi_{0.5}Mn_{1.5}O₄ | Li_{4/3}Ti_{5/3}O₄ | Capacity retention rate/% | Judgment |
|---|---|---|---|---|
| | Specific surface area/m²g⁻¹ | Specific surface area/m²g⁻¹ | | |
| Comparative Example 1 | 0.2 | 3 | 48 | B |
| Comparative Example 2 | 0.5 | 3 | 46 | B |
| Comparative Example 3 | 0.8 | 3 | 43 | B |
| Comparative Example 4 | 1.0 | 3 | 40 | B |
| Comparative Example 5 | 1.2 | 3 | 37 | B |
| Example 1 | 0.2 | 4 | 65 | A |
| Example 2 | 0.5 | 4 | 64 | A |
| Example 3 | 0.8 | 4 | 59 | A |
| Example 4 | 1.0 | 4 | 50 | A |
| Comparative Example 6 | 1.2 | 4 | 42 | B |
| Example 5 | 0.2 | 5 | 68 | A |
| Example 6 | 0.5 | 5 | 65 | A |
| Example 7 | 0.8 | 5 | 58 | A |
| Example 8 | 1.0 | 5 | 52 | A |
| Comparative Example 7 | 1.2 | 5 | 41 | B |
| Example 9 | 0.5 | 10 | 66 | A |
| Example 10 | 0.5 | 15 | 67 | A |
| Example 11 | 0.5 | 20 | 66 | A |

As is apparent from Table 1, the conditions where a capacity retention rate of 50% or more (evaluation A) was obtained were those in which the specific surface area of the positive electrode active material satisfies the range of 0.2 m²g⁻¹ or more and 1 m²g⁻¹ or less, and the specific surface area of the negative electrode active material satisfies the range of 4 m²g⁻¹ or more and 20 m²g⁻¹ or less.

### (Reference Examples 12 to 15, Comparative Examples 8 to 11)

Batteries were prepared by using Li_{4/3}Ti_{5/3}O₄ as a composition of a negative electrode active material, specifying a specific surface area thereof at 5 m²g⁻¹, fixing the specific surface area of a positive electrode active material at 0.5 m²g⁻¹ and changing only the Ni amount of the positive electrode active material to obtain batteries of Examples 12 to 15 and Comparative Examples 8 to 11, respectively. The evaluation results of these capacity retention rates are shown in Table 2. Note that, for comparison, the Example 6 is listed in Table 2.

**[Table 2]**

| | Positive electrode active material | Capacity retention rate/% | Judgment |
|---|---|---|---|
| Comparative Example 8 | LiNi_{0.3}Mn_{1.7}O₄ | 43 | B |
| Comparative Example 9 | LiNi_{0.35}Mn_{1.65}O₄ | 49 | B |
| Example 12 | LiNi_{0.4}Mn_{1.6}O₄ | 58 | A |
| Example 13 | LiNi_{0.45}Mn_{1.55}O₄ | 63 | A |
| Example 6 | LiNi_{0.5}Mn_{1.5}O₄ | 65 | A |
| Example 14 | LiNi_{0.55}Mn_{1.45}O₄ | 63 | A |
| Example 15 | LiNi_{0.6}Mn_{1.4}O₄ | 59 | A |
| Comparative Example 10 | LiNi_{0.65}Mn_{1.35}O₄ | 48 | B |
| Comparative Example 11 | LiNi_{0.7}Mn_{1.3}O₄ | 43 | B |

From Table 2, it was found that the capacity retention rate of the lithium ion secondary battery becomes 50% or more when a value a which represents the Ni amount of a positive electrode active material of formula (1) is 0.4 or more and 0.6 or less, and thus satisfactory fast-charging characteristics can be obtained.

### (Reference Examples 16 to 27, Comparative Examples 12 to 15)

Batteries were prepared by using Li_{4/3}Ti_{5/3}O₄ as the composition of a negative electrode active material, specifying the specific surface area thereof at 10 m²g⁻¹, fixing the specific surface area of a positive electrode active material at 0.5 m²g⁻¹ and changing only the M1 amount of the positive electrode active material to obtain batteries of Examples 16 to 27 and Comparative Examples 12 to 15, respectively. The evaluation results of these capacity retention rates are shown in Table 3. Note that, for comparison, the Example 9 is listed in Table 3.

**[Table 3]**

| | Positive electrode active material | Capacity retention rate/% | Judgment |
|---|---|---|---|
| Example 9 | LiNi_{0.5}Mn_{1.5}O₄ | 66 | A |
| Example 16 | LiNi_{0.5}Mn_{1.4}Ti_{0.1}O₄ | 72 | A |
| Example 17 | LiNi_{0.5}Mni_{1.2}Ti_{0.3}O₄ | 71 | A |
| Example 18 | LiNi_{0.5}Mn_{1.1}Ti_{0.4}O₄ | 63 | A |
| Comparative Example 12 | LiNi_{0.5}MnTi_{0.5}O₄ | 48 | B |
| Example 19 | LiNi_{0.5}Mn_{1.4}Si_{0.1}O₄ | 73 | A |
| Example 20 | LiNi_{0.5}Mn_{1.2}Si_{0.3}O₄ | 69 | A |
| Example 21 | LiNi_{0.5}Mn_{1.1}Si_{0.4}O₄ | 62 | A |
| Comparative Example 13 | LiNi_{0.5}MnSi_{0.5}O₄ | 46 | B |
| Example 22 | LiNi_{0.4}Mn_{1.5}Co_{0.1}O₄ | 74 | A |
| Example 23 | LiNi_{0.4}Mn_{1.3}CO_{0.3}O₄ | 75 | A |
| Example 24 | LiNi_{0.4}Mn_{1.2}Co_{0.4}O₄ | 67 | A |
| Comparative Example 14 | LiMn_{1.5}Co_{0.5}O₄ | 43 | B |
| Example 25 | LiNi_{0.4}Mn_{1.5}Cr_{0.1}O₄ | 72 | A |
| Example 26 | LiNi_{0.4}Mn_{1.3}Cr_{0.3}O₄ | 76 | A |
| Example 27 | LiNi_{0.4}Mn_{1.2}Cr_{0.4}O₄ | 68 | A |
| Comparative Example 15 | LiMn_{1.5}Cr_{0.5}O₄ | 44 | B |

According to Table 3, it was found that the capacity retention rate of the lithium ion secondary battery becomes 50% or more when a value b which represents the M1 amount of a positive electrode active material of formula (1) is 0 or more and 0.4 or less, and thus, satisfactory fast-charging characteristics can be obtained. Furthermore, it was found that as long as value b of formula (1) falls within the aforementioned range, even if M1 is any one of Ti, Si, Co and Cr, a satisfactory capacity retention rate can be obtained.

### (Reference Examples 28 to 32, Comparative Example 16)

Batteries were prepared by using Li_{4/3}Ti_{5/3}O₄ as the composition of a negative electrode active material, specifying the specific surface area thereof at 20 m²g⁻¹, fixing the specific surface area of a positive electrode active material at 0.5 m²g⁻¹ and the M1 amount at 0.1 and changing only M1 to obtain batteries of Examples 28 to 32 and Comparative Example 16, respectively. The evaluation results of these capacity retention rates are shown in Table 4.

**[Table 4]**

| | Positive electrode active material | Capacity retention rate/% | Judgment |
|---|---|---|---|
| Example 28 | LiNi_{0.4}Mn_{1.5}Li_{0.1}O₄ | 74 | A |
| Example 29 | LiNi_{0.4}Mn_{1.5}Mg_{0.1}O₄ | 80 | A |
| Example 30 | LiNi_{0.4}Mn_{1.5}Fe_{0.1}O₄ | 76 | A |
| Example 31 | LiNi_{0.4}Mn_{1.5}B_{0.1}O₄ | 77 | A |
| Example 32 | LiNi_{0.4}Mn_{1.5}Al_{0.1}O₄ | 75 | A |
| Comparative Example 16 | LiNi_{0.4}Mn_{1.5}Ba_{0.1}O₄ | 45 | B |

According to Table 4, it was found that the capacity retention rate of the lithium ion secondary battery becomes 50% or more when M1 is Li, Mg, Fe, B or Al, and thus satisfactory fast-charging characteristics can be obtained. In contrast, when M1 was substituted with Ba, a predetermined effect was not obtained. The results are related to the fact that the ion radius of ionized Ba (Ba²⁺) is twice or more as large as the ion radius of Ni²⁺ to be substituted, which indicates that the substitution element for Ni falls within certain limitations.

### (Reference Examples 33 to 40)

Batteries were prepared by using Li_{4/3}Ti_{5/3}O₄ as the composition of a negative electrode active material, specifying the specific surface area thereof at 20 m²g⁻¹, fixing the specific surface area of a positive electrode active material at 0.5 m²g⁻¹, using two types or more elements as M1 and changing the composition thereof to obtain batteries of Examples 33 to 40. The evaluation results of these capacity retention rates are shown in Table 5.

**[Table 5]**

| | Positive electrode active material | Capacity retention rate/% | Judgment |
|---|---|---|---|
| Example 33 | LiNi_{0.5}Mn_{1.4}Si_{0.05}Ti_{0.05}O₄ | 73 | A |
| Example 34 | LiNi_{0.45}Li_{0.05}Mn_{1.4}Ti_{0.1}O₄ | 77 | A |
| Example 35 | LiNi_{0.45}Al_{0.05}Mn_{1.4}Si_{0.1}O₄ | 75 | A |
| Example 36 | LiNi_{0.4}B_{0.05}Al_{0.05}Mn_{1.5}O₄ | 78 | A |
| Example 37 | LiNi_{0.4}Fe_{0.05}Al_{0.05}Mn_{1.5}O₄ | 72 | A |
| Example 38 | LiNi_{0.4}Li_{0.05}Mg_{0.05}Mn_{1.4}Si_{0.1}O₄ | 79 | A |
| Example 39 | LiNi_{0.4}Cr_{0.05}Al_{0.05}Mn_{1.4}Ti_{0.1}O₄ | 81 | A |
| Example 40 | LiNi_{0.4}Co_{0.05}B_{0.05}Mn_{1.5}O₄ | 74 | A |

Table 5 shows evaluations of the cases where Ni of a positive electrode active material was substituted with combinations of each element of Ti, Si, Co, Fe, Cr, Al, Mg, B and Li serving as M1. According to the evaluation results of Table 5, it was found that the capacity retention rate of the lithium ion secondary battery becomes 50% or more even if any combination of these is used and thus satisfactory fast-charging characteristics can be obtained.

### (Reference Example 41, Examples 42 to 45, Comparative Examples 17, 18)

Batteries were prepared by using LiNi_{0.45}Li_{0.05}Mn_{1.4}Ti_{0.1}O₄ as the composition of a positive electrode active material, specifying the specific surface area thereof at 0.5 m²g⁻¹, fixing the specific surface area of the negative electrode active material at 20 m²g⁻¹ and changing only M2 of the negative electrode active material and value c which represents M2 amount of formula (II) to obtain batteries of Examples 41 to 45 and Comparative Examples 17, 18, respectively. The evaluation results of these capacity retention rates are shown in Table 6.

**[Table 6]**

| | Negative electrode active material | Capacity retention rate/% | Judgment |
|---|---|---|---|
| Example 41 | Li_{4/3}Ti_{5/3}O₄ | 73 | A |
| Example 42 | Li_{4/3}Ti_{4.9/3}Ta_{0.1/3}O₄ | 77 | A |
| Example 43 | Li_{4/3}Ti_{1.6}Ta_{0.2/3}O₄ | 68 | A |
| Comparative Example 17 | Li_{4/3}Ti_{4.7/3}Ta_{0.1}O₄ | 45 | B |
| Example 44 | Li_{4/3}Ti_{4.9/3}Zr_{0.1/3}O₄ | 75 | A |
| Example 45 | Li_{4/3}Ti_{1.6}Zr_{0.2/3}O₄ | 63 | A |
| Comparative Example 18 | Li_{4/3}Ti_{4.7/3}Zr_{0.1}O₄ | 47 | B |

According to Table 6, it was found that the capacity retention rate of the lithium ion secondary battery becomes 50% or more when value c of formula (II) is less than 0.1, and thus satisfactory fast-charging characteristics can be obtained. It was also found that as long as value c of formula (II) falls within the aforementioned range, even if M2 is either one of Ta and Zr, a satisfactory capacity retention rate can be obtained.

### (Example 46, Reference Examples 47 to 48, Comparative Example 19)

Batteries were prepared by using LiNi_{0.4}Li_{0.05}Al_{0.05}Mn_{1.4}Si_{0.1}O₄ as the composition of a positive electrode active material, specifying the specific surface area thereof at 0.5 m²g⁻¹, fixing the specific surface area of a negative electrode active material at 20 m²g⁻¹ and changing only M2 of the negative electrode active material and value c which represents M2 amount of formula (II) to obtain batteries of Examples 46 to 48 and Comparative Example 19, respectively. The evaluation results of these capacity retention rates are shown in Table 7.

**[Table 7]**

| | Negative electrode active material | Capacity retention rate/% | Judgment |
|---|---|---|---|
| Example 46 | Li_{4/3}Ti_{4.9/3}Cr_{0.1/3}O₄ | 75 | A |
| Example 47 | Li_{4/3}Ti_{4.9/3}Ni_{0.1/3}O₄ | 78 | A |
| Example 48 | Li_{4/3}Ti_{4.9/3}V_{0.1/3}O₄ | 75 | A |
| Comparative Example 19 | Li_{4/3}Ti_{4.9/3}Ag_{0.1/3}O₄ | 48 | B |

According to Table 7, it was found that when Ti of a negative electrode active material is substituted with any one of elements of Cr, Ni and V serving as M2, the capacity retention rate of the lithium ion secondary battery becomes 50% or more, similarly to the case of substitution with Ta or Zr, and thus a satisfactory fast-charging characteristics can be obtained. In contrast, in the case of substitution with Ag, a predetermined effect was not obtained. The results are related to the fact that the ionic radius of ionized Ag (Ag⁺) is twice or more as large as the ionic radius of Ti⁴⁺ to be substituted, which indicates that the substitution element of Ti falls within certain limitations.

By virtue of a series of evaluations described in Table 1 to Table 7, the following facts were confirmed. Lithium ion secondary batteries were prepared by using a positive electrode active material represented by LiₓNiₐM1_{b}Mn_{2-a-b}O₄ of formula (I), in which a specific surface area is defined to define the interface reaction site between an electrolyte and the active material, and a negative electrode active material represented by Li_{y}Ti_{5/3-c}M2_{c}O₄ of formula (II), in which a specific surface area is similarly defined to define the interface reaction site between the electrolyte and the active material. The lithium ion secondary batteries can maintain a sufficiently large capacity retention rate even after high temperature storage at 60°C for 90 days.

From the above, the lithium ion secondary battery according to the present exemplary embodiment conceivably maintains sufficient fast-charging characteristics even after a long-term use by the user. Therefore, according to the present exemplary embodiment, it is possible to provide a lithium ion secondary battery having high reliability for practical use by users. More specifically, according to the present exemplary embodiment, it was found that a lithium ion secondary battery capable of fast-charging can be provided.

This application claims a priority right based on Japanese Patent Application No. 2010-169248 filed on July 28, 2010.

In the above, the invention of the present application has been explained by way of exemplary embodiments and Examples; however, the invention of the present application is not limited to the above exemplary embodiments and Examples. The constitution and details of the invention of the present application can be modified in various ways within the scope of the appended claims.

### Reference Signs List

- 11: Positive electrode active material
- 12: Negative electrode active material
- 13: Positive electrode collector
- 14: Negative electrode collector
- 15: Separator
- 16,17: Outer-package laminate
- 18: Positive electrode tab
- 19: Negative electrode tab

## Claims

1. A lithium ion secondary battery comprising a positive electrode and a negative electrode,
wherein the positive electrode comprises a lithium nickel manganese oxide represented by the following formula (I)
LiₓNiₐM1_{b}Mn_{2-a-b}O₄ (I)
wherein in formula (I), M1 represents at least one selected from the group consisting of Ti, Si, Co, Fe, Cr, Al, Mg, B and Li; 0 < x ≤ 1; 0.4 ≤ a ≤ 0.6; and 0 < b ≤ 0.4, and
having a specific surface area of 0.2 m²g⁻¹ or more and 1 m²g⁻¹ or less; and wherein
the negative electrode comprises a lithium titanium oxide represented by the following formula (II)
Li_{y}Ti_{5/3-c}M2_{c}O₄ (II)
wherein in formula (II), M2 represents at least one selected from the group consisting of Ta, Zr, and Cr; 4/3 ≤ y ≤ 7/3 and 0 < c < 0.1, and
having a specific surface area of 4 m²g⁻¹ or more and 20 m²g⁻¹ or less.

2. The lithium ion secondary battery according to Claim 1, wherein M1 of formula (I) is at least one selected from the group consisting of Ti, Si, Fe and Cr.

## Patentansprüche

1. Lithiumionen-Sekundärbatterie, die eine positive Elektrode und eine negative Elektrode aufweist,
wobei die positive Elektrode ein Lithium-Nickel-Mangan-Oxid aufweist, das durch die folgende Formel (I) repräsentiert wird:
LiₓNiₐM1_{b}Mn_{2-a-b}O₄ (I)
wobei in der Formel (I) M1 mindestens eines repräsentiert, das aus der Gruppe ausgewählt ist, die aus Ti, Si, Co, Fe, Cr, Al, Mg, B und Li besteht; 0<x≤1; 0,4≤a≤0,6; und 0<b≤0,4, und
eine spezifische Oberfläche von 0,2 m²g⁻¹ oder mehr und 1 m²g⁻¹ oder weniger aufweist; und
wobei die negative Elektrode ein Lithium-Titan-Oxid aufweist, das durch die folgende Formel (II) repräsentiert wird:
Li Ti_{5/3-c}M2_{c}O₄ (II)
wobei in der Formel (II), M2 mindestens eines repräsentiert, das aus der Gruppe ausgewählt ist, die aus Ta, Zr, und Cr besteht; 4/3 ≤ y ≤ 7/3 und 0 < c < 0,1, und
eine spezifische Oberfläche von 4 m²g⁻¹ oder mehr und 20 m²g⁻¹ oder weniger aufweist.

2. Lithiumionen-Sekundärbatterie nach Anspruch 1, wobei M1 der Formel (I) mindestens eines ist, das aus der Gruppe ausgewählt ist, die aus Ti, Si, Fe und Cr besteht.

## Revendications

1. Batterie secondaire au lithium-ion comprenant une électrode positive et une électrode négative,
où l'électrode positive contient un oxyde de lithium-nickel-manganèse représenté par la formule (I) suivante :
LiₓNiₐM1_{b}Mn_{2-a-b}O₄ (I)
où, dans ladite formule (I), M1 représente au moins un élément sélectionné dans le groupe composé de Ti, Si, Co, Fe, Cr, Al, Mg, B et Li ; 0<x≤1 ; 0,4≤a≤0,6 ; et 0<b≤0,4, et
dont la surface spécifique est comprise entre 0,2 m²g⁻¹ et 1 m²g⁻¹ ; et où l'électrode négative contient un oxyde de lithium-titane représenté par la formule (II) suivante :
Li Ti_{5/3-c}M2_{c}O₄ (II)
où, dans ladite formule (II), M2 représente au moins un élément sélectionné dans le groupe composé de Ta, Zr, et Cr ; 4/3 ≤ y ≤ 7/3 et 0 < c < 0,1, et
dont la surface spécifique est comprise entre 4 m²g⁻¹ et 20 m²g⁻¹.

2. Batterie secondaire au lithium-ion selon la revendication 1, où dans la formule (I), M1 est au moins un élément sélectionné dans le groupe composé de Ti, Si, Fe et Cr.
